# EUROPEAN PATENT APPLICATION

(11) **EP 4 372 267 A1**
(43) Date of publication of application: **22.05.2024**
(21) Application number: 22841730.9
(22) Date of filing: 24.03.2022
(51) Int. Cl.: F21S 2/00, G02F 1/13357

(54) **PLANAR LIGHTING DEVICE**

(30) Priority: 15.07.2021 JP 2021116790
(71) Applicant: Minebea Mitsumi Inc., Kitasaku-gun, Nagano 3890293 (JP)
(72) Inventor: ADACHI, Kazumasa, Kitasaku-gun, Nagano 389-0293 (JP)
(74) Representative: Zabel, Julia Elisabeth
(86) International application number: PCT/JP2022/014102
(87) International publication number: WO 2023/286380

(57) **Abstract**

A planar lighting device (1) according to an embodiment comprises a bottom frame (2) and a top cover (14). The bottom frame (2) is made by die casting and has a stepped section (2d) on an inner side of an end surface of an opening. The top cover (14) has a frame-like shape, and has: an intermediate layer (15) on which an outer peripheral section of an incident-side surface is fixed to the stepped section (2d); and a light-shielding layer (17) fixed to approximately the entire surface of an emission side surface of the intermediate layer (15).

## Description

### Technical Field

The present invention relates to a planar illumination device.

### Background Art

A planar illumination device used as a backlight or the like in a liquid crystal display device is known (e.g., see PTLS 1 to 3 or the like). Such a planar illumination device may be an edge lighting type planar illumination device for receiving light from one side surface (light incident side surface) of a light guide plate and emitting light from one main surface of the light guide plate, or a direct type planar illumination device including a plurality of light sources disposed vertically and horizontally in a plane.

All types of planar illumination devices often include a bottom frame for accommodating components and a top frame for closing an open side of the bottom frame. The top frame also serves to shield the periphery of an effective light emitting area from light and prevent the components accommodated inside from jumping out. In general, the bottom frame is often formed by metal die casting or the like, and the top frame is often formed of a sheet metal or by resin molding.

On the other hand, in addition to flat liquid crystal display devices, curved liquid crystal display devices have been increasingly used in recent years as liquid crystal display devices in vehicles. Accordingly, the number of both flat planar illumination devices and curved planar illumination devices has been increasing. Therefore, it is desirable for the structure of the planar illumination device to be easily adaptable to both a flat shape and a curved shape. Furthermore, demand for a narrower frame is high.

### Citation List

### Patent Literature

PTL 1: JP 2021-12884 A
PTL 2: JP 2015-18700 A
PTL 3: JP 2018-37416 A

### Summary of Invention

### Technical Problem

As described above, the top frame is often formed of a sheet metal or by resin molding, but sheet metal and resin molding have both advantages and disadvantages. More specifically, sheet metal is advantageous for creating a narrow frame because sheet metal can be made as thin as a fraction of a millimeter. However, sheet metal cannot be used as the top frame of a curved planar illumination device because a bent portion cannot be formed into a curved shape. On the other hand, resin molding is disadvantageous for creating a narrow frame because, while a top frame having a curved shape is easily formed, the molding thickness cannot be made smaller than about 1 mm.

The present invention has been made to solve the problem described above, and it is an object of the present invention to provide a planar illumination device easily adaptable to both a flat shape and a curved shape and advantageous for creating a narrow frame.

### Solution to Problem

To solve the problem described above and achieve the object described above, a planar illumination device according to an aspect of the present invention includes a bottom frame and a top cover. The bottom frame is made by die casting and includes a step portion inward of an end surface of an opening. The top cover has a frame shape and includes an intermediate layer having an outer peripheral portion of an incident side surface fixed at the step portion, and a light-shielding layer fixed at substantially an entire surface of an emission side surface of the intermediate layer.

A planar illumination device according to an aspect of the present invention is easily adaptable to both a flat shape and a curved shape and can be advantageous for creating a narrow frame.

### Brief Description of Drawings

FIG. 1 is a plan view illustrating an example of an external appearance of a planar illumination device according to an embodiment, as viewed from an emission surface side.
FIG. 2 is a front view illustrating an example of a flat type planar illumination device.
FIG. 3 is a front view (1) illustrating an example of a curved type planar illumination device.
FIG. 4 is a front view (2) illustrating an example of the curved type planar illumination device.
FIG. 5 is a Y-Y cross-sectional view illustrating an example of the flat type planar illumination device in FIGS. 1 and 2.
FIG. 6A is an enlarged view of a portion A in FIG. 5.
FIG. 6B is an enlarged view of a portion B in FIG. 5.
FIG. 7 is a view (1) illustrating an example of structures of an intermediate layer and a light-shielding layer at a corner portion of a top cover.
FIG. 8 is a view (2) illustrating an example of the structures of the intermediate layer and the light-shielding layer at the corner portion of the top cover.

### Description of Embodiments

A planar illumination device according to an embodiment is described below with reference to the drawings. Note that the present invention is not limited to the embodiment. Furthermore, the dimensional relationships between elements, proportions of the elements, and the like in the drawings may differ from reality. The drawings may include parts having mutually different dimensional relationships and proportions. Furthermore, the contents described in one embodiment or modification examples are applied in principle to other embodiments or modification examples.

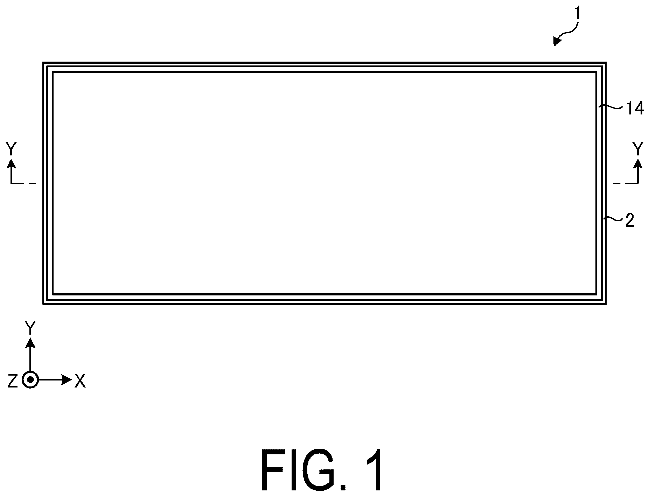

FIG. 1 is a plan view illustrating an example of an external appearance of a planar illumination device 1 according to an embodiment, as viewed from an emission surface side. In FIG. 1, for the sake of convenience, a direction along a long side of a housing of the planar illumination device 1 is referred to as an X-axis direction, a direction along a short side of the housing is referred to as a Y-axis direction, and a direction along the thickness of the housing is referred to as a Z-axis direction; however, the planar illumination device 1 may be used in any orientation.

In FIG. 1, the planar illumination device 1 has a substantially rectangular and substantially flat plate-like outer shape, and a top cover 14 covers an open side of a bottom frame 2 to form the housing. Note that the shape of the top cover 14 is not limited to a rectangular shape and may be a circular shape, an elliptical shape, or a polygonal shape, or may include a portion having a shape (irregular shape) partially different from other portions.

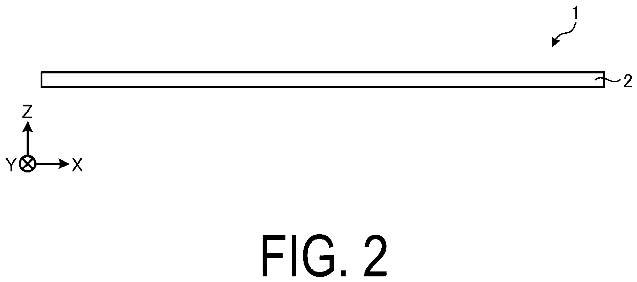

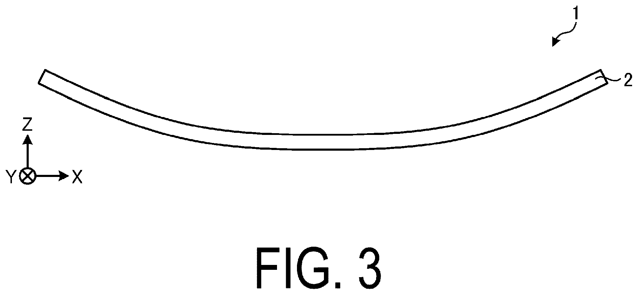

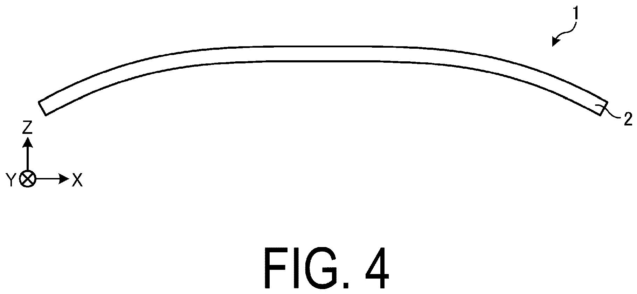

FIG. 2 is a front view illustrating an example of the planar illumination device 1 of a flat type, and a side wall of the bottom frame 2 linearly extends in the X-axis direction. FIG. 3 is a front view illustrating an example of the planar illumination device 1 of a curved type, and a side wall of the bottom frame 2 is curved to recess toward an emission surface side (upper side in the drawing). FIG. 4 is a front view illustrating another example of the type planar illumination device 1 of a curved type, and a side wall of the bottom frame 2 is curved to protrude toward an emission surface side (upper side in the drawing).

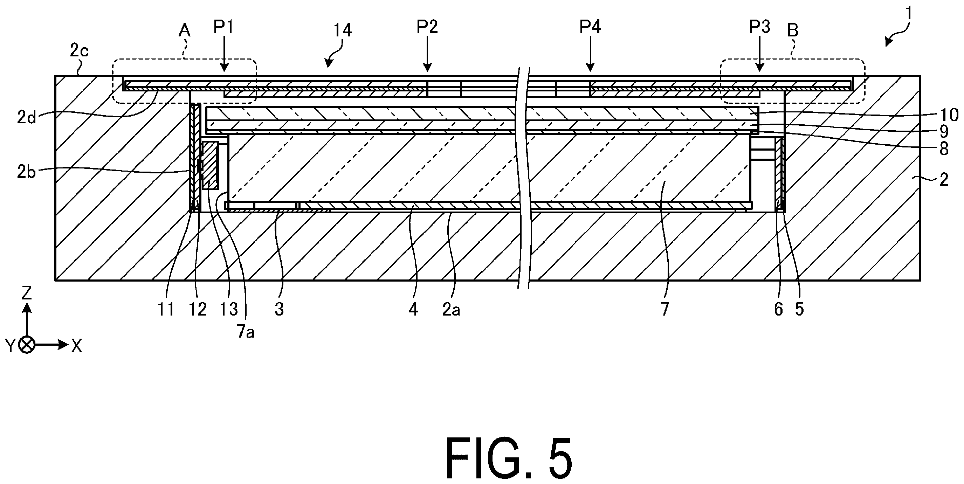

FIG. 5 is a Y-Y cross-sectional view illustrating an example of the planar illumination device 1 of a flat type in FIGS. 1 and 2. In the case of the planar illumination device 1 of a curved type, the planar illumination device 1 is curved in the X-axis direction but internal configurations are similar. Although an edge lighting type planar illumination device is taken as an example in the present embodiment, a direct type planar illumination device accommodating light sources disposed vertically and horizontally in a plane may be used.

In FIG. 5, the bottom frame 2 is made by die casting and has a substantially box-like shape with a bottom and no cover. Further, an opening is formed by a bottom surface 2a and a side wall inner surface 2b rising from the periphery of the bottom surface 2a. A step portion 2d is provided inward of an end surface 2c of the opening.

A light guide plate 7 and a part of a reflector 4 are bonded and fixed at a light incident side (left side in the drawing) of the bottom surface 2a of the bottom frame 2 via a fixing member 3 such as double-sided tape. The light guide plate 7 has a substantially rectangular and substantially flat plate-like outer shape, is formed of a transparent resin or the like such as polycarbonate, guides light incident from a light incident side surface 7a to a terminal end side, and emits light from a main surface on the upper side in the drawing. The reflector 4 is a sheet-like member having high diffuse reflection characteristics, such as a white sheet-like member, and improves light efficiency by reflecting light leaking from a back surface of the light guide plate 7 back to the light guide plate 7. A strip-like reflector 6 is also bonded and fixed at a side wall inner surface of the light guide plate 7 at the terminal end side via a fixing member 5 such as double-sided tape.

A substantially band-shaped substrate 12 made of flexible printed circuits (FPC) or the like is bonded and fixed at the side wall inner surface 2b at the light incident side by a fixing member 11 such as double-sided tape. A plurality of light sources 13 such as light emitting diodes (LEDs) are disposed in a row on the substrate 12 and emit light toward the light incident side surface 7a of the light guide plate 7. The illustrated light source 13 is a top view type light source for emitting light from a top surface and emits light with a normal direction (X-axis direction) of the substrate 12 as a substantially central axis. Note that, changing the arrangement of the substrate 12 makes it possible to use a side view type light source for emitting light from a side surface.

Optical sheets 8 to 10 are placed at the emission surface side of the light guide plate 7. The optical sheet 8 is, for example, a diffuser (diffusion film). The optical sheet 9 is, for example, a prism sheet such as a BEF (brightness enhancement film manufactured by 3M Japan Limited). The optical sheet 10 is, for example, a prism sheet such as a DBEF (brightness enhancement film manufactured by 3M Japan Limited).

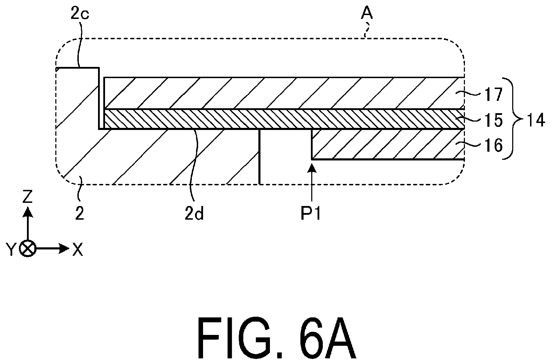

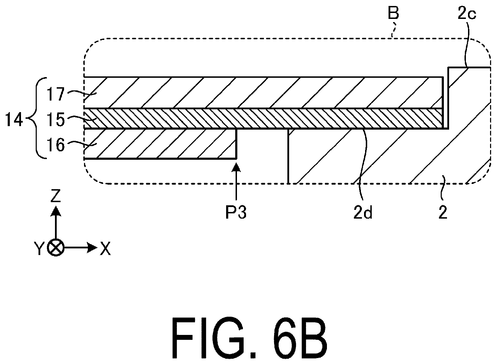

The top cover 14 is bonded and fixed at the emission side of the bottom frame 2. FIG. 6A is an enlarged view of a portion A in FIG. 5. FIG. 6B is an enlarged view of a portion B in FIG. 5.

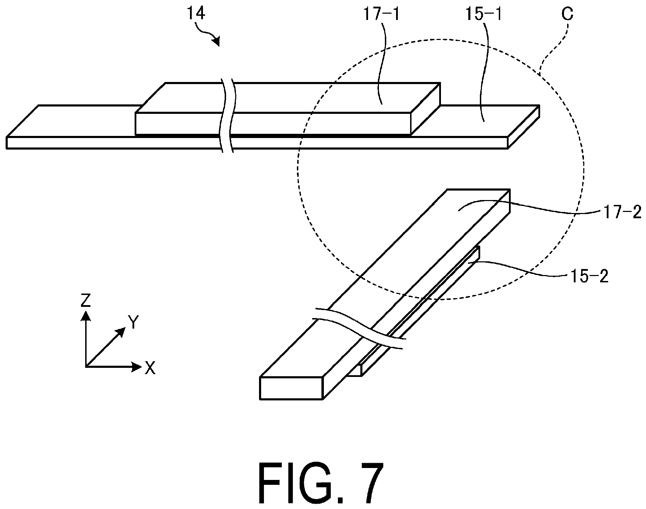

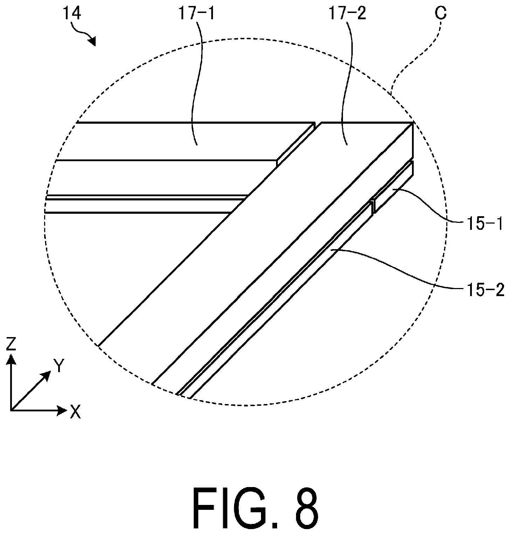

In FIGS. 5, 6A, and 6B, the top cover 14 has a frame shape (substantially square shape in plan view) and includes an intermediate layer 15, a diffuse reflection layer 16, and a light-shielding layer 17. The intermediate layer 15 is double-sided tape having a PET material as a base material, and an outer peripheral portion of a surface at an incident side (lower side in the drawing) is bonded and fixed at the step portion 2d of the bottom frame 2. The diffuse reflection layer 16 is, for example, a PET material colored white or gray, and is bonded and fixed from predetermined positions P1 and P3 inward of the step portion 2d of the surface at the incident side of the intermediate layer 15 to positions P2 and P4 of an inner end portion. The light-shielding layer 17 is, for example, a PET material colored black and is bonded and fixed at substantially the entire surface of a surface at an emission side of the intermediate layer 15. Note that the material of the top cover 14 may be stainless steel (SUS) instead of a PET material. In this case, thermal stability is excellent and better results are obtained in a reliability test. When SUS is used for the top cover 14, cost may be increased, but this can be solved by adopting the structure (strip structure) in FIGS. 7 and 8 to be described below. The diffuse reflection layer 16 is effective in improving luminance and luminance evenness in a region in the vicinity of the inner end portion positions P2 and P4 in an effective light emitting region (region between the inner end portion positions P2 and P4 not covered with the top cover 14), but may not necessarily be provided depending on required specifications for luminance.

As described above, since the housing of the planar illumination device 1 is constituted by the bottom frame 2 and the top cover 14, the planar illumination device 1 can be easily adaptable to both a flat shape and a curved shape and can be advantageous for creating a narrow frame. That is, since the top cover 14 is flexible, the curvature can be easily adjusted to be flat or curved, and since there is no side wall as in the top frame in the related art, a frame narrower by an amount corresponding to the clearance between the side wall and the side wall of the bottom frame can be obtained. Unlike the top frame in the related art, the top cover 14 requires no step of fitting to the bottom frame and can be assembled in the same step as a step of affixing tape. Thus, assembly is easy and automatic assembly is also possible.

Since the intermediate layer 15, the diffuse reflection layer 16, and the light-shielding layer 17 are each made of a PET material, linear expansion with respect to a change in temperature can be reduced and deformation or peeling of the top cover 14 can be prevented. Since the light-shielding layer 17 is colored black, light-shielding properties can be improved. Since the intermediate layer 15 is colored white, black, or gray, the luminance around the opening of the top cover 14 can be adjusted. Note that a cover glass of a liquid crystal panel (not illustrated) is bonded and fixed at the end surface 2c of the bottom frame 2, so that connection with the liquid crystal panel can be facilitated and the liquid crystal panel can be integrated as a liquid crystal display (LCD) module.

The top cover 14 described above is formed by, for example, cutting out the inside of each of three rectangular sheets in a rectangular shape to form a frame shape. However, since the cut-out portions of the sheets are not used for the product and are wasted, the yield of the material is low and reducing costs is difficult. A configuration of the top cover 14 capable of improving material yield is described below.

FIGS. 7 and 8 are views illustrating examples of structures of the intermediate layer and the light-shielding layer at a corner portion of the top cover 14. FIG. 7 illustrates a state of the intermediate layer 15 and the light-shielding layer 17 at a corner portion C before bonding, and FIG. 8 illustrates a state of the intermediate layer 15 and the light-shielding layer 17 at the portion C after bonding.

In FIGS. 7 and 8, the top cover 14 is formed of a plurality of strip-like members. When the top cover 14 is frame-shaped and rectangular, the plurality of members constituting the top cover 14 are desirably four members corresponding to four sides. Although the diffuse reflection layer 16 is omitted in FIGS. 7 and 8, the diffuse reflection layer 16 is also provided.

At one corner portion C of the top cover 14, a short side of an intermediate layer 15-2 of a second member is in contact with (or opposes and is adjacent to) a long side of an intermediate layer 15-1 of a first member extending in a lateral direction of the drawing, and a light-shielding layer 17-2 of the second member is disposed covering contact portions (opposing portions) between the intermediate layers 15-1 and 15-2. On the other hand, a short side of a light-shielding layer 17-1 of the first member is in contact with (or opposes and is adjacent to) a long side of the light-shielding layer 17-2 of the second member extending in an oblique direction in the drawing, and the intermediate layer 15-1 of the first member is disposed covering contact portions (opposing portions) between the light-shielding layers 17-1 and 17-2 from a lower side. In other words, the contact portion (opposing portion) between the intermediate layers 15-1 and 15-2 and the contact portion (opposing portion) between the light-shielding layers 17-1 and 17-2 are disposed at positions not overlapping each other (at positions orthogonal to each other in the present embodiment). Since the intermediate layer 15-1 fills a gap between the contact portions (opposing portions) of the light-shielding layers 17-1 and 17-2, the intermediate layer 15-1 is required to have a light-shielding property, and the intermediate layer 15-1 (also the intermediate layer 15-2) is desirably double-sided tape having, for example, a PET material colored black as a base material.

In FIGS. 7 and 8, the diffuse reflection layer 16 is not illustrated; however, similarly to the intermediate layer 15 and the light-shielding layer 17, the diffuse reflection layer 16 is also formed in a strip shape and is disposed so that one long side and the other short side are in contact with each other or oppose and are adjacent to each other at a corner portion. In this case, the diffuse reflection layer of the second member may be disposed covering the contact portion (opposing portion) between the intermediate layers 15-1 and 15-2, or may be disposed to be in contact with or to oppose and be adjacent to the diffuse reflection layer of the first member at the contact portion (opposing portion) between the intermediate layers 15-1 and 15-2.

With this configuration, since the top cover 14 is formed of a plurality of strip-like members, less base material can be used and the cost can be reduced as compared with when the inside of a sheet is punched out and the punched inner portion is discarded. Further, when the top cover 14 has a rectangular shape, the plurality of members are four members corresponding to four sides, and the top cover 14 having a frame shape can be formed with the minimum number of members. By covering the contact portions between the intermediate layers with the light-shielding layer, light can be prevented from leaking from connection portions between members, and the connection between members can be strengthened.

The embodiments of the present invention have been described above, but the present invention is not limited to the embodiments described above, and various modifications are possible without departing from the spirit of the present invention.

As described above, a planar illumination device according to an embodiment includes a bottom frame made by die casting and having a step portion inward of an end surface of an opening, and a top cover having a frame shape and including an intermediate layer having an outer peripheral portion of an incident side surface fixed at the step portion and a light-shielding layer fixed at substantially an entire surface of an emission side surface of the intermediate layer. Thus, the planar illumination device can be easily adaptable to both a flat shape and a curved shape, and can be advantageous for narrowing a frame.

That is, since the top cover is flexible, the curvature can be easily adjusted to be flat or curved, and since the top cover has no side wall as in the top frame, a narrower frame can be obtained by the clearance between the side wall and the side wall of the bottom frame. Unlike the top frame in the related art, the top cover requires no step of fitting the top cover to the bottom frame and can be assembled in the same step as a step of attaching a tape, so that the top cover can be easily assembled and can be automatically assembled.

The planar illumination device further includes a diffuse reflection layer fixed from an inside of the step portion of the incident side surface of the intermediate layer to an inner end portion. Thus, the luminance of an effective light emitting region in the vicinity of a non-effective light emitting region covered with the top cover can be improved to improve luminance uniformity.

The intermediate layer is a double-sided tape having a PET material as a base material, and the diffuse reflection layer and the light-shielding layer are each a PET material. Thus, linear expansion with respect to a change in temperature can be reduced and deformation or peeling of the top cover can be prevented.

The light-shielding layer is colored black. Thus, light-shielding properties can be improved.

The diffuse reflection layer is colored white, black, or gray. Thus, the luminance around an opening of the top cover can be adjusted.

The top cover is formed of an integral member or a plurality of strip-like members. Thus, a manufacturing method of the top cover can be selected. When the top cover is formed of a plurality of members, a base material can be saved and the cost can be reduced as compared with when the inside of a sheet is punched out and the punched inner portion is discarded.

The plurality of members are four members corresponding to four sides of the top cover having a frame-like rectangular shape. Thus, the top cover having a frame shape can be formed with a minimum number of members.

At one corner portion of the top cover, a short side of the intermediate layer of a second member opposes a long side of the intermediate layer of a first member, and the light-shielding layer of the second member is disposed covering opposing portions between the intermediate layers. Thus, when the top cover is formed of a plurality of strip-like members, light can be prevented from leaking from a connection portion between the members and the connection between the members can be strengthened.

A cover glass of a liquid crystal panel is bonded and fixed at an end surface of the opening of the bottom frame. Thus, connection with the liquid crystal panel can be facilitated, and the liquid crystal panel can be integrated as an LCD module.

The bottom frame accommodates a light source and a light guide plate being components of an edge lighting type planar illumination device, or a light source being a component of a direct type planar illumination device and being arranged vertically and horizontally in a plane. This makes it possible to cope with different types of device configurations.

Moreover, the present invention is not limited to the embodiments described above. A configuration obtained by appropriately combining the above-mentioned components is also included in the present invention. Further effects and modification examples can be easily derived by a person skilled in the art. Thus, a wide range of aspects of the present invention is not limited to the embodiment described above and may be modified variously.

### Reference Signs List

1 Planar illumination device, 2 Bottom frame, 2a Bottom surface, 2b Side wall inner surface, 2c End surface, 2d Step portion, 3 Fixing member, 4 Reflector, 5 Fixing member, 6 Reflector, 7 Light guide plate, 7a Light incident side surface, 8, 9, 10 Optical sheet, 11 Fixing member, 12 Substrate, 13 Light source, 14 Top cover, 15 Intermediate layer, 16 Diffuse reflection layer, 17 Light-shielding layer

## Claims

1. A planar illumination device comprising:
a bottom frame made by die casting and including a step portion inward of an end surface of an opening; and
a top cover having a frame shape and including an intermediate layer having an outer peripheral portion of an incident side surface fixed at the step portion and a light-shielding layer fixed at substantially an entire surface of an emission side surface of the intermediate layer.

2. The planar illumination device according to claim 1, further comprising:
a diffuse reflection layer fixed from an inside of the step portion of the incident side surface of the intermediate layer to an inner end portion.

3. The planar illumination device according to claim 2,
wherein the intermediate layer is a double-sided tape having a PET material as a base material, and
the diffuse reflection layer and the light-shielding layer are each a PET material.

4. The planar illumination device according to any one of claims 1 to 3, wherein the light-shielding layer is colored black.

5. The planar illumination device according to claim 2 or 3, wherein the diffuse reflection layer is colored white or gray.

6. The planar illumination device according to any one of claims 1 to 5, wherein the top cover is formed of an integrated member or a plurality of strip-like members.

7. The planar illumination device according to claim 6, wherein the plurality of members are four members corresponding to four sides of the top cover having a frame-like rectangular shape.

8. The planar illumination device according to claim 7,
wherein, at one corner portion of the top cover, a short side of the intermediate layer of a second member opposes a long side of the intermediate layer of a first member,
the light-shielding layer of the second member is disposed covering opposing portions between the intermediate layers,
a short side of the light-shielding layer of the first member opposes a long side of the light-shielding layer of the second member, and
the intermediate layer of the first member is disposed covering opposing portions between the light-shielding layers.

9. The planar illumination device according to any one of claims 1 to 8, wherein a cover glass of a liquid crystal panel is bonded and fixed at an end surface of the opening of the bottom frame.

10. The planar illumination device according to any one of claims 1 to 9, wherein the bottom frame accommodates a light source and a light guide plate being components of an edge lighting type planar illumination device, or a light source being a component of a direct type planar illumination device and being arranged vertically and horizontally in a plane.
